# EUROPÄISCHE PATENTSCHRIFT

(11) **EP 0 492 061 B1**
(45) Veröffentlichungstag und Bekanntmachung des Hinweises auf die Patenterteilung: **27.07.1994**
(21) Anmeldenummer: 91115651.1
(22) Anmeldetag: 14.09.1991
(51) Int. Cl.: H02J 7/00

(54) **Fernbedienungssystem**
Remote control system
Système de télécommande

(30) Priorität: 29.11.1990 DE 4038038
(43) Veröffentlichungstag der Anmeldung: 01.07.1992
(73) Patentinhaber: MERCEDES-BENZ AG, 70327 Stuttgart (DE)
(72) Erfinder: Claar, Klaus, Dipl.-Ing., W-7268 Gechingen (DE); Lindmayer, Martin, Dipl.-Ing., W-7250 Leonberg (DE)

(56) Entgegenhaltungen:
- DE-A- 3 043 627
- DE-A- 3 314 072
- DE-A- 3 421 540
- US-A- 4 622 544
- US-A- 4 737 784

## Beschreibung

Die Erfindung bezieht sich auf ein Fernbedienungssystem mit den Merkmalen des Oberbegriffs des Patentanspruchs 1. Ein bekanntes Fernbedienungssystem mit diesen Merkmalen (DE 33 14 072 C2) ist insbesondere zur Fernbedienung eines Schloßsystems für die mechanische und elektronische Steuerung von Fahrzeugverriegelungen vorgesehen. Sein (Hand-)Sender hat eine eigene Ladekontrolleinrichtung mit Anzeige und besitzt darüber hinaus zur elektrischen Kontaktierung mit dem Fahrzeugbordnetz Energieaufnahmekontakte, die beim Einstecken des Senders in eine eigens vorgesehene Aufnahme im Fahrzeuginneren (z. B. am Zündschloß) mit entsprechenden Anschlußkontakten der Aufnahme elektrisch verbunden werden. Der Sender kann beim Kontaktieren mit den Anschlußkontakten in der Aufnahme oder durch Drücken seiner Sendetaste zum Abstrahlen eines Steuersignals über seinen Signalausgang in die Aufnahme hinein veranlaßt werden, welches von einer Empfangseinrichtung ausgewertet wird.
Über die Funktionsweise der Ladezustandsanzeige des gattungsbildenden Fernbedienungssystems wird nichts weiter ausgesagt. Es ist jedoch üblich, daß sie bei Betätigung des Senders dann aktiviert wird, wenn der Ladezustand des Stromspeichers noch ausreicht, und somit eine aktive Zustandskontrolle darstellt.
Eine Vorrichtung zum Verhindern einer unbefugten Benutzung eines Fahrzeugs ist bekannt (DE 30 43 627 C2), die ebenfalls einen Sender zur drahtlosen Übertragung von Steuersignalen sowie eine eigens vorgesehene Sender-Aufnahme im Fahrzeuginneren enthält. Wird der Sender in diese Aufnahme, in welche ein Lichtleitkabel mündet, eingeschoben, so kann seine Sendetaste selbsttätig durch einen in der Aufnahme in der Bewegungsbahn der Sendetaste angeordneten Nocken betätigt werden, so daß ein Steuersignal von dem Sender abgestrahlt und in und über das erwähnte Lichtleitkabel übertragen wird. In der bekannten Vorrichtung dient dieses selbsttätig abgestrahlte Steuersignal lediglich zur Aufhebung einer Sperre eines für den Betrieb des Fahrzeugs wesentlichen Aggregats, die durch Ausgangssignale einer anderseitig an das Lichtleitkabel angeschlossenen, auf die Steuersignale des Senders abgestimmten Empfangseinrichtung gesteuert wird.
Die erwähnte einfache mechanische Zwangsauslösung eines Sendersignals über einen Nocken ist nicht anwendbar bei solchen Sendern, deren Sendetaste oberseitig flächenbündig mit der Außenhülle des Senders selbst abschließt und deren Betätigungsrichtung im Winkel zu der Richtung liegt, in welcher der Sender in die Aufnahme eingesteckt wird.
Der Sender hat in dem letztgenannten System nur fakultativ einen eigenen Stromspeicher; über eine Ladezustandskontrolle mit Anzeige wird in der letztgenannten Druckschrift nichts ausgesagt.

Der (Hand-)Sender eines weiteren bekannten Fernbedienungssystems (DE 34 46 245 A1) enthält ebenfalls selbst eine Ladekontrolleinrichtung für den Ladezustand seines Stromspeichers, welche bei Betätigung des Senders und einer daraufhin intern festgestellten geringen Restladung des Stromspeichers anspricht und ein an den Benutzer gerichtetes optisches oder akustisches Warnsignal erzeugt. Dieses System enthält keine fahrzeuginterne Aufnahme für den Sender.

Es sind Batterieprüfgeräte bekannt (z. B. DE-Z mot Heft 20/1990, Seite 157), welche den Ladezustand z. B. von Kfz-Bleiakkumulatoren messen und auch anzeigen können.

Die Erfindung hat die Aufgabe, bei einem gattungsgemäßen Fernbedienungssystem eine senderexterne Einrichtung zum Überprüfen des Ladezustands des Stromspeichers und ggf. Erzeugen eines Warnsignals zu schaffen.

Diese Aufgabe wird mit den kennzeichnenden Merkmalen des Patentanspruchs 1 erfindungsgemäß gelöst.

Durch Zuordnung der Ladekontrolleinrichtung zu einer externen Aufnahme für den Sender des Fernbedienungssystems, in welche dieser einsteckbar und in welcher er entweder elektrisch oder über Steuersignal kontaktierbar ist, und Aktivierung der zugehörigen optischen und/oder akustischen Ladezustandsanzeige bei Betätigung des Senders innerhalb der Aufnahme bei nicht ausreichendem Ladezustand des Stromspeichers des Senders wird eine zuverlässige Überwachung von dessen Kapazität erreicht, ohne im Sender selbst eine zumindest im Hinblick auf die Ladezustandsanzeige Einbauraum beanspruchende Vorrichtung vorsehen zu müssen.
Im übrigen ist in diesem Fall die Funktion der Ladezustandsanzeige nicht von der Restkapazität des Stromspeichers abhängig, vielmehr wird die Warnanzeige von einer externen Quelle gespeist.

Die kennzeichnenden Merkmale der Unteransprüche offenbaren vorteilhafte Weiterbildungen des erfindungsgemäßen Fernbedienungssystems.

Eine Variante der Kapazitäts- oder Ladezustandsüberwachung nutzt die an sich bekannten Energieaufnahmekontakte des Senders und die damit korrespondierenden Anschlußkontakte der Aufnahme zur direkten elektrischen Kontaktierung des Senders bzw. seines Stromspeichers mit der Ladekontrolleinrichtung und zur Messung von Spannung und/ oder Leistung des Stromspeichers durch diese. Hierbei ist es nicht unbedingt notwendig, den Sender auch zu betätigen; es kann jedoch gleichwohl sinnvoll sein, den Zustand des Stromspeichers während einer Betätigung des Senders, also unter Last, zu messen.

Eine andere Variante bedient sich einer indirekten Ermittlung, indem der Sender mit der der Aufnahme nachgeschalteten Ladekontrolleinrichtung nur mittelbar über die berührungslose Übertragung von dessen Steuersignalen kontaktiert wird. Hierbei wird die Intensität des von dem Sender bei seiner Betätigung in der Aufnahme abgestrahlten Steuersignals erfaßt. Sollte diese einen Schwellwert unterschreiten, so wird daraus auf bevorstehenden Ausfall des Stromspeichers bzw. von dessen Ladung geschlossen und ein Warnsignal erzeugt.

Bei der Intensitätsauswertung kann der Absolutwert der empfangenen Signalintensität erfaßt werden, indem z. B. die durch den Empfang des abgestrahlten Steuersignals im Empfänger erzeugte (im Fall von Infrarotübertragung fotoelektrische) Spannung gemessen und mit einem Soll- bzw. Schwellwert verglichen wird. Die Ladezustandsanzeige wird bei Unterschreitung dieses Wertes eingeschaltet.

Im vorliegenden Fall ist zusätzlich in Betracht zu ziehen, daß der Sender z. B. zur Fernbedienung einer Fahrzeugverriegelung oder auch eines anderen fernbedienbaren Aggregats im allgemeinen aus einer größeren Entfernung zu dem entsprechenden Empfänger benutzt und betätigt wird. Bei seiner Verwendung in der Aufnahme, in der sich sein Ausgang, z. B. eine Infrarot-Sendediode, in praktisch unmittelbarer Nähe zu einem Empfänger befindet, besteht mithin prinzipiell - bei gut geladenem Stromspeicher - ein Intensitätsüberschuß gegenüber den erwähnten anderen Anwendungsfällen.
Nach einem weiteren vorteilhaften Merkmal der Erfindung kann daher speziell im Hinblick auf die allgemein bevorzugte Infrarotlicht-Übertragung der Steuersignale in an sich bekannter Weise (vgl. DE 36 39 715 A1) ein Filter zwischen den Sender-Signalausgang und den Empfänger eingebaut werden, welcher die hinter dem Filter noch empfangbare Intensität der Steuersignale gegenüber der abgestrahlten geringfügig abschwächt. Hierdurch wird der erwähnte Intensitätsüberschuß jedenfalls teilweise gezielt abgebaut. Eine äquivalente Gestaltung ist natürlich auch bei Verwendung anderer Übertragungsmedien, z. B. Funk oder Ultraschall, prinzipiell möglich.

Die Ladezustandsanzeige kann damit dann aktiviert werden, wenn sichergestellt ist, daß sich der Sender in der Aufnahme befindet und auch betätigt wurde und trotzdem vom Empfänger kein Signal erfaßt werden konnte.
Durch gezielte Auswahl der Filterwirkung bzw. des Filter- oder Dämpfungsgrads läßt sich der gewünschte Warnschwellwert bzw. der zu prüfende soll-Intensitätsüberschuß in weiten Grenzen variieren.

Der Hauptvorteil einer solchen Anordnung besteht darin, daß keine eigentliche Schwellwertauswertung mehr benötigt wird, denn es wird einfach aus dem trotz (zwangsläufiger) Senderbetätigung nicht empfangenen Signal auf Stromspeicherentladung rückgeschlossen.

Andere Merkmale beziehen sich auf die Auslösung des Abstrahlens eines Steuersignals des Senders, der in die Aufnahme eingesteckt wird. Natürlich könnte vor der Zustandserfassung prinzipiell abgewartet werden, ob bzw. bis der Benutzer des Senders diesen manuell aktiviert.
Bevorzugte Varianten werden den Sender dann in geeigneter Weise automatisch betätigen, schon wenn er in die Aufnahme eingesteckt wird, oder erst in zeitlicher beabstandeter Folge zu dem Einsteckvorgang.

Am einfachsten ist dies möglich bei einem Sender, dessen Sendetaste in einer parallel zur Einsteckrichtung liegenden Richtung betätigbar ist und in Einsteckrichtung vorn liegt, weil diese dann gegen einen entsprechenden Vorsprung in der Aufnahme geschoben werden kann.
Natürlich ist zur gleichzeitigen Ladezustandskontrolle mittels der Signalintensität noch eine Einrichtung notwendig, welche die Anwesenheit des Senders in der Aufnahme für den Fall erfaßt, daß die Ladung des Stromspeichers für die Erzeugung eines auswertbaren Signals nicht mehr ausreichen sollte.
Diese kann ebenfalls über die an sich bekannten Aufnahmenkontakte der Aufnahme wirken.
Es kann aber auch zusätzlich zu oder anstelle der Erfassung über die besagten Aufnahmen- bzw. Anschlußkontakte eine eigene Erfassungseinrichtung vorgesehen werden, die z. B. mechanisch oder elektrisch wirkt. Denkbare Lösungen sind elektromechanische Taster, die in die Aufnahme hineinragen und beim Einstekken des Senders betätigt werden, wobei z. B. über ein Stellelement ein Betätigungsstößel angesteuert werden kann, der seinerseits auf die Sendetaste des Senders einwirkt.
Auch rein mechanische Lösungen, z. B. mit einem federbelasteten Schaltfühler und einem mit diesem mechanisch verbundenen, auf die Sendetaste des Senders einwirkenden Betätigungsstößel sind zur kombinierten Anwesenheitserfassung und Zwangsauslösung eines Sendersignals in der Aufnahme denkbar.
Eine weitere interessante Variante ist eine berührungslose, insbesondere induktive oder kapazitive Erfassung des Senders in der Aufnahme. Hiermit kann zum einen dessen Anwesenheit festgestellt und zum anderen - in ebenfalls an sich bekannter Weise (vgl. DE 35 01 482 A1) - der Sender automatisch zur Abgabe eines Steuersignals veranlaßt werden, dessen Intensität dann in der oben beschriebenen Weise erfaßt werden kann.
Schließlich sei noch erwähnt, daß auch eine Lichtschranke zur Erfassung der Anwesenheit des Senders in der Aufnahme verwendet werden kann.
In einer kraftfahrzeugspezifischen Lösung der vorstehend genannten Art, bei der in der Aufnahme - die sich z. B. im Armaturenbrett des Fahrzeugs befinden wird - ein aus dem Bordnetz des Fahrzeugs gespeister aktiver Sensor zur Anwesenheitserfassung vorgesehen ist, ist es mit Rücksicht auf die begrenzte Kapazität der Fahrzeugbatterie natürlich ratsam, den jeweiligen Sensor erst mit der Entriegelung des Fahrzeugs - die bekanntlich auch mittels des in Rede stehenden Senders des Fernbedienungssystems gesteuert werden kann - einzuschalten.
Mit einem Sender, der in bekannter Weise mit einem mechanischen (Zünd-)Schlüssel vereint ist, könnten als weitere Variante die Anwesenheitserfassung, die Signalauslösung und die Ladezustandskontrolle im Zusammenhang mit und in Abhängigkeit von der Schlüsselbetätigung eines als Aufnahme dienenden Zylinderschlosses durchgeführt werden.

Weitere Einzelheiten und Vorteile gehen aus der Zeichnung mehrerer Ausführungsbeispiele und deren sich hier anschließender eingehender Beschreibung hervor.

Es zeigen
- Figur 1: eine erste Ausführungsform, in welcher eine zur Erfassung der Spannung des Stromspeichers vorgesehene Ladezustandskontrolleinrichtung des Fernbedienungssystems einer Aufnahme für einen Sender nachgeordnet ist,
- Figur 2: die Ausführungsform nach Figur 1 mit in die Aufnahme eingestecktem und darin selbsttätig zum Abstrahlen eines Steuersignals aktiviertem Sender,
- Figur 3: eine zweite Ausführungsform, in welcher eine zur Erfassung der Intensität eines von dem Sender in die Aufnahme hinein abgestrahlten Steuersignals vorgesehene Ladezustandskontrolleinrichtung des Fernbedienungssystems der Aufnahme für den Sender nachgeordnet ist,
- Figur 4: einen Ausschnitt einer dritten Ausführungsform mit einem Sender, der mit einem mechanischen Schlüssel kombiniert ist und einer als Zylinderschloß ausgeführten Aufnahme.

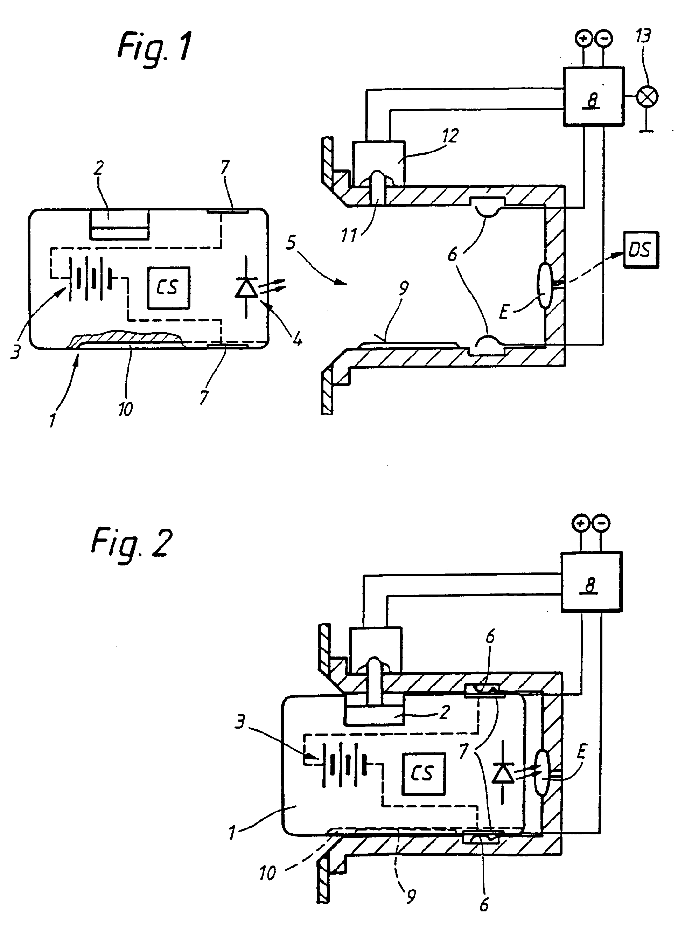

In einem Fernbedienungssystem wird gemäß **Figur 1** ein tragbarer (Hand-)Sender 1 mit einer bündig mit seiner Außenhülle abschließenden Sendetaste 2, einem eingebauten Stromspeicher 3 und einem Ausgang 4 zur Erzeugung von codierten Steuersignalen und zu deren berührungsloser Übertragung auf entsprechend abgestimmte Empfänger verwendet. Für derartige Systeme gibt es vielfältige Verwendungszwecke, um nur die Bedienung von Geräten der Unterhaltungselektronik, von Meßgeräten, von Fahrzeugaggregaten und dort insbesondere von Fahrzeugverriegelungen und -diebstahlsicherungen zu nennen.

Die gängigsten Ausführungsformen dieser Systeme bedienen sich derzeit der Signalübertragung durch Infrarotstrahlen. Der Ausgang 4 des Senders 1 besteht dann aus einer hier für Beispielszwecke schematisch angedeuteten Infrarot-Sendediode. In der Regel enthält der Sender 1 auch noch eine Einrichtung zum Modulieren der über den Ausgang 4 abzustrahlenden Steuersignale, z. B. einen Codespeicher CS.
Andere Fernbedienungssysteme arbeiten mit Funk- oder Ultraschallübertragung der Steuersignale; diese Ausführungen sind hinsichtlich der hier relevanten Aspekte als äquivalent anzusehen.

Infolge der geringen anzustrebenden Baugröße des Senders 1, der z. B. in Bekleidungstaschen des jeweiligen Benutzers einsteckbar sein soll, ist die Kapazität von dessen Stromspeicher 3 begrenzt. In einem Fahrzeug ist deshalb eine - hier nur stark vereinfacht angedeutete - Aufnahme 5 für den Sender 1 vorgesehen, in welche dieser während des Betriebs des Fahrzeugs eingesteckt werden kann.
In der Aufnahme 5 ist der Sender 1 mit einem dieser nachgeschalteten Aggregat kontaktierbar. Hierunter sind sowohl das elektrische Bordnetz des Fahrzeugs (Batterie, Generator) als auch solche Aggregate zu verstehen, die durch in die Aufnahme 5 hinein abgestrahlte Steuersignale des Senders 1 in bekannter Weise gesteuert werden können. Ein solches ist hier nur symbolisch angedeutet und beispielsweise als Diebstahlsicherungseinrichtung DS ausgeführt, die unter anderem eine auf den Empfang der Steuersignale des Senders 1 abgestimmte Empfangseinrichtung enthält. Letztere ist im Falle der hier vorliegenden Infrarotlicht-Übertragung über eine Sammellinse E und z. B. ein Lichtleitkabel mit der Aufnahme verbunden.

In einer ersten Variante der Kontaktierung des Senders 1 in der Aufnahme 5 zum Zweck der Ladezustandskontrolle des Stromspeichers 3 hat die Aufnahme 5 Aufnahmenkontakte 6, die mit Anschlußkontakten 7 des Senders 1 korrespondieren. Mit dem - nur durch Symbole "+" und "-" angedeuteten - Bordnetz des Fahrzeugs sind die Aufnahmenkontakte 6 über eine Ladekontrolleinrichtung 8 elektrisch verbunden, während die Anschlußkontakte 7 des Senders 1 durch gestrichelt angedeutete interne Verbindungen an den Stromspeicher 3 des Senders 1 angeschlossen sind. Über die aneinanderliegenden Aufnahmenkontakte 6 und Anschlußkontakte 7 (vgl. Fig. 2) kann z. B. ein als Stromspeicher 3 verwendeter Akkumulator in bekannter Weise aus dem Fahrzeug-Bordnetz aufgeladen werden.
Es versteht sich, daß durch eine geeignete, nur beispielsweise als Nut-Feder-Paarung 9/10 angedeutete Formcodierung der Aufnahme 5 und des Senders 1 sichergestellt ist, daß letzterer nur in einer bestimmten Richtung und Lage in die Aufnahme 5 eingesteckt werden kann.
Zur selbsttätigen Veranlassung des in die Aufnahme 5 eingesteckten Senders 1 zum Abstrahlen eines Steuersignals sind an dieser ein deren Wand durchdringender Betätigungsstößel 11 und ein zu dessen Hubverstellung vorgesehenes, durch die Ladekontrolleinrichtung 8 aktivierbares, beispielsweise elektromagnetisch arbeitendes Stellelement 12 angeordnet.

Um den Ladezustand des Stromspeichers 3 unter Last zu ermitteln, wird dessen - in **Figur 2** dargestellte - Anwesenheit in der Aufnahme 5 von der Ladekontrolleinrichtung 8 automatisch erfaßt. Dies ist z. B. durch Erfassung der dann bestehenden elektrischen Verbindung bzw. Widerstandsänderung zwischen den Aufnahmenkontakten 6 über den Stromspeicher 3 ohne weiteres möglich. Vorzugsweise mit einer geringen zeitlichen Verzögerung, die sicherstellt, daß der Sender 1 noch bis zum Anschlag in die Aufnahme 5 eingesteckt werden kann, wird daraufhin die Sendetaste 2 des Senders 1 durch den Betätigungsstößel 11 des Stellelements 12 selbsttätig für kurze Zeit niedergedrückt, wodurch der Sender 1 über seinen Ausgang 4 ein den Stromspeicher 3 betriebsmäßig belastendes Steuersignal abstrahlt.
Es versteht sich, daß der Sender 1 in der Aufnahme 5 durch nicht näher dargestellte Rastmittel sicher festgelegt wird; zum Herausnehmen kann er entweder, wie dargestellt, noch ein Stück weit aus der Aufnahme herausragen, so daß er von Hand ergriffen werden kann, oder es kann eine eigene Auswerfertaste, wie sie z. B. von Kartentelefon-Apparaten her bekannt ist, vorgesehen werden, wenn der Sender bündig in die Aufnahme passen soll.

Außerdem kann, wenn schon ein Stellelement zur selbsttätigen Aktivierung des Senders 1 in der Aufnahme 5 vorhanden ist, für den Benutzer zusätzlich noch ein nicht dargestellter Handschalter zur willkürlichen Aktivierung dieses Stellelements und ggf. der Ladekontrolleinrichtung bereitgestellt werden.

Es versteht sich ferner, daß der Sender 1 in einer entsprechenden, an sich bekannten Ausführung anstelle der beschriebenen mechanischen Auslösung über die Sendetaste 2 mittels des Betätigungsstößels 11 zum Abstrahlen eines Steuersignals in die Aufnahme 5 hinein auch
- bereits im Moment der elektrischen Kontaktierung oder
- durch einen über die Aufnahmenkontakte 6 und die Anschlußkontakte 7 zugeführten und von der Ladekontrolleinrichtung 8 ausgelösten Aktivierungsimpuls

veranlaßt werden kann.

Die Ladekontrolleinrichtung 8 enthält in jedem Fall eine Vergleicherschaltung, an die die von dem Stromspeicher 3 gelieferte elektrische Spannung spätestens in dem Betätigungsmoment - also dann, wenn der Betätigungsstößel 11 auf die Sendetaste 2 einwirkt - angelegt wird und welche diese Spannung mit einem Referenz- oder Mindestwert vergleicht. Als Bauteil der Vergleicherschaltung kommt z. B. ein Schwellwertschalter in Frage, wobei dessen Referenz- oder Mindestwert z. B. mittels eines Potentiometers einstellbar sein sollte.
Sollte die gelieferte Spannung des Stromspeichers 3 unter dem Mindestwert liegen, so aktiviert die Ladekontrolleinrichtung 8 eine ihr zugeordnete Ladezustandsanzeige 13, z. B. die hier dargestellte Glühlampe, eine Leuchtdiode oder eine geeignete akustische Anzeige, wobei zu deren Betrieb das Bordnetz als Quelle dient.

Die Ladezustandsanzeige 13 könnte natürlich auch bereits dann eingeschaltet werden, wenn der stromspeicher 3 über die Anschlußkontakte 7 des Senders und die Aufnahmenkontakte 6 an die Ladekontrolleinrichtung 8 angeschlossen ist und die dann an dieser anliegende Spannung auch ohne Last bereits unter dem Mindestwert liegt.

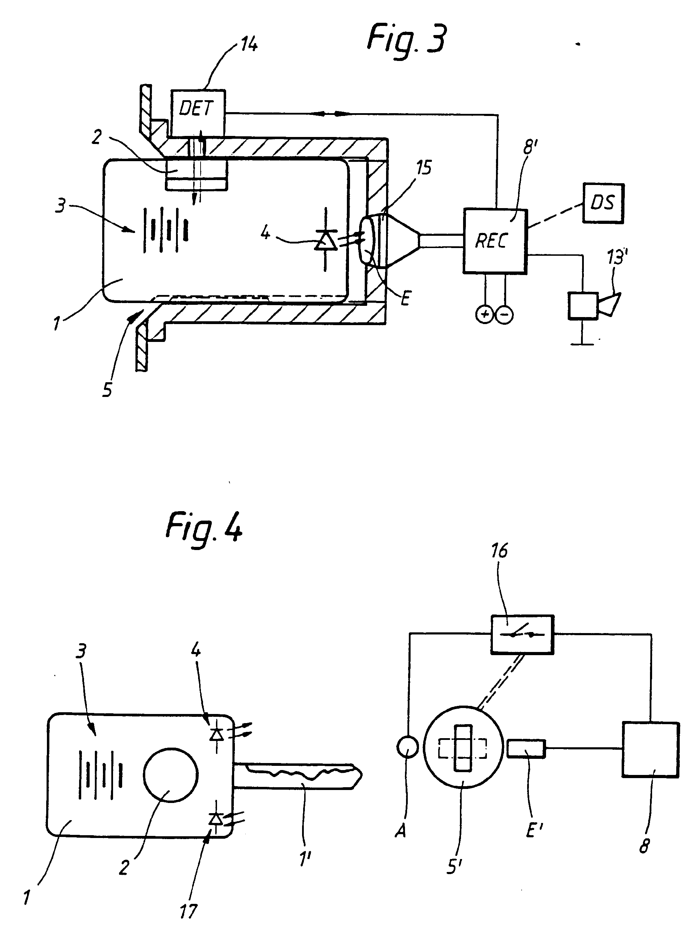

In **Figur 3** ist eine andere Ausführungsform dargestellt, die den Ladezustand des Stromspeichers 3 des Senders 1 indirekt durch eine Messung bzw. Ermittlung der Intensität eines von diesem in die Aufnahme 5 hinein abgestrahlten Steuersignals erfaßt und auswertet.
So weit möglich, wurden für gleiche Bauteile gleiche Bezugszeichen wie in Figuren 1 und 2 verwendet.

Es sei angemerkt, daß der Sender 1 auch in dieser Ausführungsform bei festgestellter Anwesenheit in der Aufnahme 5 in einer bereits oben beschriebenen Weise selbsttätig zum Abstrahlen eines Steuersignals veranlaßt werden könnte. Insoweit sind die beiden gezeigten Ausführungsformen kompatibel und austauschbar.

Schematisch ist hier jedoch an der Aufnahme 5 eine berührungslos, beispielsweise induktiv, kapazitiv oder optisch wirkende Erfassungseinrichtung 14 (Näherungssensor bzw. Detektor) dargestellt, die ihrerseits natürlich auch mit der Ausführungsform gemäß Figuren 1 und 2 kombiniert werden könnte. Sie erzeugt beim zwangsläufig lagerichtigen Einstecken des Senders 1 in die Aufnahme 5 ein elektrisches Erfassungsignal und führt dieses einer der Aufnahme 5 nachgeschalteten, auf den Empfang der Steuersignale des Senders 1 abgestimmten Empfangseinrichtung REC zu, die in dieser Ausführungsform unmittelbar auch als Ladekontrolleinrichtung 8′ mit nachgeschalteter Ladezustandsanzeige 13′ anzusehen ist bzw. diese umfaßt. Die Empfangseinrichtung REC wiederum aktiviert gleichzeitig mit der Anwesenheitserfassung oder kurze Zeit später - die Zeitspanne wird z. B. durch ein Zeitglied intern festgelegt - in nicht näher dargestellter Weise über die Erfassungseinrichtung 14 den Sender 1.

Die bidirektionale elektrische Beziehung zwischen Sender 1, Erfassungseinrichtung 14 und Empfangseinrichtung REC ist durch entgegengesetzt gerichtete Doppelpfeile angedeutet.

Die erwähnten induktiven oder kapazitiven Näherungssensoren können zu diesem Zweck auch als Sendeeinrichtungen für eigens zur berührungslosen Aktivierung des Senders 1 ausgebildet sein, wozu dieser natürlich mit einer abgestimmten Empfangs- und Auslöseeinrichtung versehen sein muß.

Als optische Erfassungseinrichtung kann z. B. eine Reflexlichtschranke verwendet werden, deren empfangenes Reflexlichtsignal sich durch das Einstecken des Senders 1 in die Aufnahme 5 ändert. In einem solchen Fall könnte der Sender 1 mit einer auf diese Reflexlichtschranke abgestimmten Empfangsdiode oder dgl. ausgestattet sein, die auf ein bestimmtes Lichtsignal oder eine Signalfolge hin eine interne Auslöseeinrichtung des Senders 1 ansteuert.

Für die Empfangseinrichtung REC / Ladekontrolleinrichtung 8′ gibt es wiederum mehrere Ausführungsmöglichkeiten im Hinblick auf die Durchführung der Ladezustandskontrolle des Stromspeichers 3. Zum einen kann sie analog zu der bereits im Zusammenhang mit Figur 2 beschriebenen Methode eine Vergleicherschaltung enthalten, welche die beim Empfang eines Steuersignals des Senders 1 erzeugte elektrische Spannung, die der Intensität des empfangenen Signals etwa proportional ist, mit einem Mindestwert vergleicht. Diese Variante ist hier nicht explizit dargestellt.
Liegt die erwähnte elektrische Größe unter dem Mindestwert, so wird die - in Figur 3 als akustischer Signalgeber dargestellte - Ladezustandsanzeige 13′ aktiviert.

Schematisch dargestellt ist in Figur 3 hingegen eine besonders einfache und vorteilhafte Methode. Zwischen dem in der Aufnahme 5 befindlichen Ausgang 4 des Senders 1 und der Empfangseinrichtung REC ist ein Filter 15 vorgesehen, welches die Intensität jedes von dem Ausgang 4 abgestrahlten Steuersignals in einem bestimmten Grad abschwächt, so daß die Intensität des von der Empfangseinrichtung REC noch empfang- und auswertbaren Signals definiert kleiner als die Intensität des abgestrahlten Signals ist.
Ohne jede Vergleicherschaltung oder dgl. in der Empfangseinrichtung REC / Ladekontrolleinrichtung 8′ kann diese dann die Ladezustandsanzeige 13′ zur Warnung vor Stromspeicherausfall (und gegebenenfalls zur Aufforderung zum Auswechseln) aktivieren, wenn der Sender 1 in die Aufnahme 5 eingesteckt und dort automatisch betätigt wird und die Empfangseinrichtung REC trotzdem kein auswertbares Signal mehr empfängt.
In der vorstehend beschriebenen und in Figur 3 dargestellten Ausführungsform sind ersichtlich in der Aufnahme 5 keine Aufnahmenkontakte vorhanden und hat der Sender 1 keine Anschlußkontakte, weil sie für die Belange dieser Ausführungsform nicht benötigt werden. Selbstverständlich können solche aber entsprechend Figuren 1 und 2 z. B. zum Aufladen des Stromspeichers 3 vorgesehen werden.

Eine dritte Variante mit einem Sender 1, der in bekannter Weise mit einem mechanischen Schlüssel 1′ zusammengebaut ist, und einer als Schließzylinder ausgeführten Aufnahme 5′ ist in **Figur 4** ausschnittweise gezeigt. Hier wird die Anwesenheit des Senders 1 in der Aufnahme 5′ durch mechanisches Drehen des Schließzylinders mittels des Schlüssels 1′ aus der durchgezogenen Abzugstellung in die gestrichelt angedeutete Betriebsstellung durch eine mit dem Schließzylinder gekuppelte Schalteinrichtung 16 elektrisch erfaßt und auch die Ladekontrolleinrichtung aktiviert.

Der Sender 1 hat wieder einen Ausgang 4 und zusätzlich einen Auslöseeingang 17 (angedeutet als Sendediode bzw. Empfangsdiode). Der Aufnahme 5′ sind ein Signaleingang E′ und ein Steuerausgang A räumlich zugeordnet. In der bei eingestecktem Sender 1 bzw. Schlüssel 1′ gedrehten Stellung des Schließzylinders steht der Ausgang 4 des Senders 1 dem Signaleingang E′ und der Auslöseeingang 17 dem Steuerausgang A unmittelbar gegenüber.

Es versteht sich, daß in der einfachen Ausführung der mechanische Schlüssel nicht als Wendeschlüssel ausgeführt sein kann; dies wäre jedoch z. B. dann möglich, wenn auf beiden Seiten des Schließzylinders sowohl ein Eingang E′ als auch ein Ausgang A angebracht wären bzw. diese in geeigneter Weise miteinander zusammengefaßt wären.

Der Ausgang A wird in nicht näher gezeigter Weise durch die betätigte Schalteinrichtung 16 kurzzeitig aktiviert, um den Sender 1 in der bereits beschriebenen Weise berührungslos zum Abstrahlen eines Steuersignals zu veranlassen. Gleichzeitig wird der der Aufnahme 5′ bzw. deren Signaleingang E′ nachgeschalteten Empfangseinrichtung REC von der Schalteinrichtung 16 ein Signal zugeführt, welche diese veranlaßt, die Intensität des von dem Ausgang 4 des Senders 1 über den Signaleingang E′ an sie übergebenen Steuersignals nach einer der bereits zu Figur 3 beschriebenen Methoden zu überprüfen.
Andererseits wäre es prinzipiell auch mit der in Figur 4 gezeigten Form der Aufnahme möglich, den Sender bzw. seinen Stromspeicher über eine z. B. durch Schleifkontakte gebildete Kontaktpaarung mit einem der Aufnahme nachgeschalteten Aggregat analog zu Figuren 1 und 2 zu kontaktieren.
Es sei schließlich noch erwähnt, daß für den Fall, daß der Benutzer den in die Aufnahme eingesteckten Sender noch über dessen Sendetaste oder über den bereits erwähnten zusätzlichen Handschalter willkürlich zum Abstrahlen eines Steuersignals veranlassen kann, eine Aktivierung der Ladekontrolleinrichtung zur direkten Prüfung des Ladezustands des Stromspeichers (Spannungspegel) über die Empfangseinrichtung durch das Steuersignal selbst vorgesehen werden kann, wenn der Aufnahme eine Empfangseinrichtung in der beschriebenen Weise nachgeschaltet ist und der Sender gemäß Figuren 1 und 2 über Kontaktpaare mit dieser elektrisch verbunden ist. Damit ergibt sich eine quasi selbsttätige direkte Ladezustandskontrolle bei jeder routinemäßigen Betätigung des eingesteckten Senders. Für die auch beschriebene indirekte Kontrolle mittels der empfangenen Signalintensität empfiehlt sich diese Vorgehensweise ohnehin. In beiden Fällen ist sie allerdings von einem ausreichenden Ladezustand des Stromspeichers abhängig.

Die vorstehend ausführlich beschriebenen Vorgehensweisen eignen sich vornehmlich zur ständigen Überprüfung des Ladezustands des Stromspeichers eines vor allem für die Fernbedienung von Kraftfahrzeug-Verriegelungen und -Diebstahlsicherungen verwendeten Senders, weil der Benutzer sich insbesondere beim Verlassen seines Fahrzeugs auf die ordnungsgemäße Funktion und Ausführung der mittels des Senders gegebenen Sicherungsbefehle verlassen können muß.
Dessen ungeachtet ergibt sich aber auch für die bereits erwähnten anderen Verwendungszwecke eine komfortable Möglichkeit der Ladezustandsüberwachung und gegebenenfalls Aufforderung zum Austausch des Stromspeichers, denn auch in einem Gerät der Unterhaltungselektronik oder in einem Meßgerät kann natürlich eine Aufnahme für den Sender in der vorstehend beschriebenen Weise angeordnet sein.

## Patentansprüche

1. Fernbedienungssystem, enthaltend
- einen Sender (1) mit einem Stromspeicher (3) und einer durch einen Benutzer zu betätigenden Sendetaste (2) zum willkürlichen Abstrahlen von aus dem Stromspeicher (3) gespeisten Steuersignalen,
- eine Ladekontrolleinrichtung (8; 8′) für den Ladezustand des Stromspeichers (3) des Senders (1) mit einer Ladezustandsanzeige (13; 13′) zur Erzeugung eines an den Benutzer gerichteten Signals,
- eine Aufnahme (5) zum Einstecken und Kontaktieren des Senders (1) mit einem der Aufnahme nachgeschalteten Aggregat (8; DS),
**gekennzeichnet durch**
- Anordnung der Ladekontrolleinrichtung (8; 8′) und der Ladezustandsanzeige (13; 13′) außerhalb des Senders (1), wobei die Ladekontrolleinrichtung (8; 8′) der Aufnahme (5; 5′) nachgeschaltet ist,
- Kontrolle des Ladezustands des Stromspeichers (3) bei in die Aufnahme eingestecktem und innerhalb dieser betätigtem Sender (1) durch die Ladekontrolleinrichtung (8; 8′),
wobei die Ladezustandsanzeige (13; 13′) bei unterhalb eines Mindestwerts liegendem Ladezustand des Stromspeichers (3) mittels einer externen Quelle aktiviert wird.

2. Fernbedienungssystem nach Anspruch 1, enthaltend
- jeweils miteinander korrespondierende Aufnahmenkontakte (6) der Aufnahme (5) und mit dem Stromspeicher (3) verbundene Anschlußkontakte (7) des Senders (1), über welche der Sender (1) elektrisch mit dem nachgeschalteten Aggregat (8; DS) verbindbar ist, wobei der Sender nur zwangsläufig lagerichtig in die Aufnahme (5) einsteckbar ist,
**gekennzeichnet durch**
- Anschluß der der Aufnahme (5) nachgeschalteten Ladekontrolleinrichtung (8) an die Aufnahmenkontakte (6) und
- Prüfung des Ladezustands des Stromspeichers (3) über die korrespondierenden Aufnahmenkontakte (6) und Anschlußkontakte (7).

3. Fernbedienungssystem nach Anspruch 2,
**gekennzeichnet durch**
- Auswertung einer über die korrespondierenden Aufnahmenkontakte (6) und Anschlußkontakte (7) an dem Stromspeicher (3) ermittelten elektrischen Größe, insbesondere der elektrischen Spannung des Stromspeichers (3), und
- Vergleich dieser Größe mit einem vorgegebenen Mindestwert dieser Größe.

4. Fernbedienungssystem nach Anspruch 1, enthaltend
- eine der Aufnahme (5) nachgeschaltete, auf den Empfang der Steuersignale des Senders (1) abgestimmte Empfangseinrichtung (REC),
**gekennzeichnet durch**
- Anschluß der der Aufnahme (5) nachgeschalteten Ladekontrolleinrichtung (8′) an die Empfangseinrichtung (REC) zur Erfassung der Intensität eines von letzterer empfangenen Steuersignals,
- Aktivierung der Ladezustandsanzeige (13′), wenn die Intensität eines durch den in der Aufnahme (5; 5′) befindlichen Sender erzeugten Steuersignals einen bestimmten Wert unterschreitet.

5. Fernbedienungssystem nach Anspruch 4,
**gekennzeichnet durch**
- Auswertung einer beim Empfang eines Steuersignals in der Empfangseinrichtung (REC) erzeugten elektrischen Größe, insbesondere einer elektrischen Spannung, und
- Vergleich dieser Größe mit einem Mindestwert dieser Größe.

6. Fernbedienungssystem nach einem der vorstehenden Ansprüche,
**gekennzeichnet durch**
Betätigungsmittel (11, 12; 14; 17, A) zum selbsttätigen Veranlassen des Senders (1) zum Abstrahlen eines Steuersignals in Folge zum Einstecken in die Aufnahme (5; 5′).

7. Fernbedienungssystem nach Anspruch 2 und 6,
in welchem der Sender (1) in Folge des Kontaktierens seiner Anschlußkontakte (6) mit den korrespondierenden Aufnahmenkontakten (7) selbsttätig zum Abstrahlen eines Steuersignals veranlaßt wird.

8. Fernbedienungssystem nach Anspruch 6,
**gekennzeichnet durch**
- Erfassungsmittel (14; 16) zur Erfassung der Anwesenheit des Senders (1) in der Aufnahme (5; 5′),
- von den Erfassungsmitteln (14; 16) steuerbare berührungslos wirkende Betätigungsmittel (14; A) zum selbsttätigen Veranlassen des Senders (1) zum Abstrahlen eines Steuersignals,
wobei der Sender (1) mit auf die Betätigungsmittel abgestimmten Empfangsmitteln (17) versehen ist.

9. Fernbedienungssystem nach Anspruch 8,
**gekennzeichnet durch**
bidirektionale Verwendung eines berührungslos wirkenden Erfassungsmittels (14) auch als berührungslos wirkendes Betätigungsmittel für den Sender (1).

10. Fernbedienungssystem nach einem der Ansprüche 6 bis 9,
**gekennzeichnet durch**
- Aktivierung der Betätigungsmittel (11, 12; 14; 17, A) über ein Zeitglied, welches eine bestimmte Verzögerungs-Zeitspanne zwischen dem Zeitpunkt der Einsteckens des Senders (1) in die Aufnahme (5; 5′) und dem Zeitpunkt des selbsttätigen Veranlassens des Senders (1) zum Abstrahlen eines Steuersignals vorgibt.

11. Fernbedienungssystem nach Anspruch 6 oder 8 oder 10, enthaltend
- eine der Aufnahme (5) nachgeschaltete, auf den Empfang der Steuersignale des Senders (1) abgestimmte Empfangseinrichtung (REC),
**gekennzeichnet durch**
- einen in der Aufnahme (5; 5′) der mit der Ladekontrolleinrichtung (8′) verbundenen Empfangseinrichtung (REC) vorgeschalteten, für die Steuersignale des Senders (1) teildurchlässigen und deren Intensität abschwächenden Filter (15),
- Aktivierung der Ladezustandsanzeige (13′) dann, wenn bei in die Aufnahme (5; 5′) eingestecktem und selbsttätig aktiviertem Sender (1) kein erfaßbares Steuersignal zur Empfangseinrichtung (REC) gelangt.

12. Fernbedienungssystem nach einem der vorstehenden Ansprüche, in welchem die Aufnahme (5′) als Schließzylinder ausgeführt und der Sender (1) mit einem mechanischen Schlüssel (1′) zu einer Baueinheit zusammengefaßt ist,
**gekennzeichnet durch**
Aktivierung der Ladekontrolleinrichtung (8′) durch Drehen des Schließzylinders in eine Betriebsstellung mittels einer mit ihm gekoppelten Schalteinrichtung (16).

13. Fernbedienungssystem nach einem der vorstehenden Ansprüche, welches zur Fernbedienung einer Kraftfahrzeug-Verriegelungseinrichtung vorgesehen ist,
**gekennzeichnet durch**
- eine aus dem elektrischen Bordnetz des Fahrzeugs betreibbare aktive Erfassungeinrichtung (14) für die Anwesenheit des Senders (1) in der Aufnahme (5),
- Aktivierung der Erfassungseinrichtung (14) nur nach vorangegangener Entriegelung der Verriegelungseinrichtung.

14. Fernbedienungssystem nach Anspruch 2 oder 3, in welchem der in die Aufnahme (5) eingesteckte Sender (1) noch willkürlich zum Abstrahlen eines Steuersignals in Richtung auf eine auf den Empfang der Steuersignale des Senders (1) abgestimmte, der Aufnahme (5) nachgeschaltete Empfangseinrichtung (REC) veranlaßt werden kann,
**gekennzeichnet durch**
Aktivierung der Ladekontrolleinrichtung (8′) über die Empfangseinrichtung (REC) durch das erzeugte Steuersignal selbst.

## Claims

1. Remote control system, containing
- a transmitter (1) with a current storage device (3) and a transmit key (2) to be actuated by an operator for the transmission, when desired, of control signals fed from the current storage device (3),
- a charge monitoring device (8; 8′) for the charge state of the current storage device (3) of the transmitter (1) with a charge-state indicator (13; 13′) for generating a signal directed at the operator,
- a receptacle (5) for inserting the transmitter (1) and making contact between the transmitter and an element (8; DS) connected downstream of the receptacle,
characterised by
- arrangement of the charge monitoring device (8; 8′) and the charge-state indicator (13; 13′) outside the transmitter (1), the charge monitoring device (8; 8′) being connected downstream of the receptacle (5; 5′),
- monitoring of the charge state of the current storage device (3) by the charge monitoring device (8; 8′) with the transmitter (1) inserted into the receptacle and actuated inside the latter, the charge-state indicator (13; 13′) being activated at a charge state of the current storage device (3) lying below a minimum value by means of an external source.

2. Remote control system according to Claim 1, containing
- in each case receiving contacts (6) of the receptacle (5) which correspond to one another and connection contacts (7) of the transmitter (1) which are connected to the current storage device (3) and via which the transmitter (1) can be electrically connected to the element (8; DS) connected downstream of it, it only being possible to connect the transmitter into the receptacle (5) in a forcibly correctly positioned manner,
characterised by
- connection of the charge monitoring device (8), connected downstream of the receptacle (5), to the receiving contacts (6) and
- testing of the charge state of the current storage device (3) via the corresponding receiving contacts (6) and connection contacts (7).

3. Remote control system according to Claim 2,
characterised by
- evaluation of an electrical variable, in particular the electrical voltage of the current storage device (3), determined at the current storage device (3) via the corresponding receiving contacts (6) and connection contacts (7), and
- comparison of this variable with a predetermined minimum value of this variable.

4. Remote control system according to Claim 1, containing
- a receiving device (REC) connected downstream of the receptacle (5) and tuned to receive the control signals of the transmitter (1), characterised by
- connection of the charge monitoring device (8′), connected downstream of the receptacle (5), to the receiving device (REC) for detecting the intensity of a control signal received by the latter,
- activation of the charge-state indicator (13′) if the intensity of a control signal generated by the transmitter located in the receptacle (5; 5′) undershoots a specific value.

5. Remote control system according to Claim 4,
characterised by
- evaluation of an electrical variable, in particular of an electrical voltage, generated on reception of a control signal in the receiving device (REC), and
- comparison of this variable with a minimum value of this variable.

6. Remote control system according to one of the preceding claims, characterised by actuation means (11, 12; 14; 17, A) for automatically causing the transmitter (1) to transmit a control signal after it is inserted into the receptacle (5; 5′).

7. Remote control system according to Claims 2 and 6, in which the transmitter (1) is caused automatically to transmit a control signal as a result of its connection contacts (6) having made contact with the corresponding receiving contacts (7).

8. Remote control system according to Claim 6,
characterised by
- detection means (14; 16) for detecting the presence of the transmitter (1) in the receptacle (5; 5′),
- actuation means (14; A), which are controllable by the detection means (14; 16) and operate in a contactless fashion, for automatically causing the transmitter (1) to transmit a control signal, the transmitter (1) being provided with receiving means (17) tuned to the actuation means.

9. Remote control system according to Claim 8, characterised by bidirectional use of detection means (14) operating in a contactless fashion, also as actua- tion means, operating in a contactless fashion, for the transmitter (1).

10. Remote control system according to one of Claims 6 to 9, characterised by
- activation of the actuation means (11, 12; 14; 17, A) via a timing element which presets a specific delay time period between the time of insertion of the transmitter (1) into the receptacle (5; 5′) and the time when the transmitter (1) is automatically caused to transmit a control signal.

11. Remote control system according to Claim 6 or 8 or 10, containing
- a receiving device (REC) connected downstream of the receptacle (5) and tuned to receive the control signals of the transmitter (1), characterised by
- a filter (15) which is connected in the receptacle (5; 5′) upstream of the receiving device (REC) connected to the charge monitoring device (8′), partially transmits the control signals of the transmitter (1) and attenuates their intensity,
- activation of the charge-state indicator (13′) whenever no detectable control signal passes to the receiving device (REC) when the transmitter (1) is inserted into the receptacle (5; 5′) and is automatically activated.

12. Remote control system according to one of the preceding claims, in which the receptacle (5′) is designed as a lock cylinder and the transmitter (1) is combined with a mechanical key (1′) to form one constructional unit, characterised by activation of the charge monitoring device (8′) by rotating the lock cylinder into an operating position by means of a switching device (16) coupled to it.

13. Remote control system according to one of the preceding claims which is provided for remotely controlling a motor-vehicle locking device, characterised by
- an active detection device (14), which can be operated from the electrical system of the vehicle, for detecting the presence of the transmitter (1) in the receptacle (5),
- activation of the detection device (14) only after unlocking of the locking device has occurred.

14. Remote control system according to Claim 2 or 3, in which the transmitter (1) inserted into the receptacle (5) can still be freely caused to transmit a control signal in the direction of a receiving device (REC) tuned to receive the control signals of the transmitter (1) and connected downstream of the receptacle (5), characterised by activation of the charge monitoring device (8′) via the receiving device (REC) by the generated control signal itself.

## Revendications

1. Système de télécommande, contenant :
- un émetteur (1) avec un accumulateur électrique (3) et une touche d'émission (2), à actionner par un utilisateur pour émettre à volonté des signaux de commande fournis par l'accumulateur électrique (3),
- un dispositif de contrôle de charge (8; 8′), pour surveiller l'état de charge de l'accumulateur électrique (3) de l'émetteur (1), avec un affichage de l'état de charge (13; 13′), pour produire un signal destiné à l'utilisateur,
- un logement (5) destiné à enficher et à mettre en contact l'émetteur (1) avec un groupe (8; DS) mis en circuit en aval du logement,
caractérisé par
- l'agencement du dispositif de contrôle de charge (8; 8′) et de l'affichage d'état de charge (13; 13′), à l'extérieur de l'émetteur (1), le dispositif de contrôle de charge (8; 8′) étant mis en circuit en aval du logement (5; 5′),
- un contrôle de l'état de charge de l'accumulateur électrique (3) lorsque l'émetteur (1) est enfiché dans le logement et actionné à l'intérieur de celui-ci, le contrôle étant effectué au moyen du dispositif de contrôle de charge (8; 8′),
- l'affichage d'état de charge (13; 13′) étant activé au moyen d'une source externe lorsque l'état de charge de l'accumulateur électrique (3) est descendu au-dessous d'une valeur minimale.

2. Système de télécommande selon la revendication 1, contenant :
- des contacts de logement (6) se correspondant chacun entre eux, dans le logement (5) et avec des contacts de raccordement (7), reliés à l'accumulateur électrique (3), de l'émetteur (1), par l'intermédiaire desquels l'émetteur (1) est susceptible d'être relié électriquement au groupe (8; DS) mis en circuit en aval, l'émetteur ne pouvant être enfiché dans le logement (5) comprenant obligatoirement une position correcte,
caractérisé par,
- le raccordement du dispositif de contrôle de charge (8) mis en circuit en aval du logement (5) aux contacts de logement (6), et
- le contrôle de l'état de charge de l'accumulateur électrique (3) par l'intermédiaire des contacts de logement (6) et des contacts de raccordement (7) correspondants.

3. Système de télécommande selon la revendication 2, caractérisé par :
- l'évaluation d'une grandeur électrique, déterminée par les contacts de logement (6) et les contacts de raccordement (7) correspondants, sur l'accumulateur électrique (3), en particulier l'évaluation de la tension électrique de l'accumulateur électrique (3) et,
- la comparaison de cette valeur avec une valeur minimale prédéterminée de cette grandeur,

4. Système de télécommande selon la revendication 1, contenant :
- un dispositif de réception (REC) mis en circuit en aval du logement (5), conçu pour recevoir les signaux de commande de l'émetteur (1).
caractérisé par,
- le raccordement du dispositif de contrôle de charge (8′) mis en circuit en aval du logement (5) au dispositif de réception (REC), pour appréhender l'intensité d'un signal de commande reçu par ce dernier,
- l'activation de l'affichage d'état de charge (13′) lorsque l'intensité d'un signal de commande, produit par l'émetteur se trouvant dans le logement (5; 5′), descend en dessous d'une valeur déterminé.

5. Système de télécommande selon la revendication 4, caractérisé par :
- l'évaluation d'une grandeur électrique produite lors de la réception d'un signal de commande dans le dispositif récepteur (REC), en particulier une tension électrique, et
- la comparaison de cette grandeur à une valeur minimale de celle-ci.

6. Système de télécommande selon l'une des revendications précédentes, caractérisé par :
des moyens d'actionnement (11, 12; 14; 17, A), pour provoquer automatiquement l'émission, par l'émetteur (1), d'un signal de commande, suite à l'enfichage dans le logement (5; 5′).

7. Système de télécommande selon les revendications 2 et 6, dans lequel l'émetteur (1) émet automatiquement un signal de commande, suite à la mise en contact de ses contacts de raccordement (6) avec les contacts de logement (7) correspondants.

8. Système de télécommande selon la revendication 6, caractérisé par :
- des moyens d'appréhension (14; 16), destinés à appréhender la présence de l'émetteur (1) dans le logement (5; 5′),
- des moyens d'actionnement (14; A) agissant sans contact et pouvant être commandés par les moyens d'appréhension (14; 16), en vue de provoquer l'émission automatique, par l'émetteur (1), d'un signal de commande, l'émetteur (1) étant pourvu de moyens de réception (17) conçus en fonction des moyens d'actionnement.

9. Système de télécommande selon la revendication 8, caractérisé par une utilisation bidirectionnelle d'un moyen d'appréhension (19) agissant sans contact, également comme moyen d'actionnement agissant sans contact, pour l'émetteur (1).

10. Système de télécommande selon l'une des revendications 6 à 9, caractérisé par
- l'activation des moyens d'actionnement (11, 12; 14; 17, A), par l'intermédiaire d'un organe temporisé allouant un intervalle de temps de retardement déterminé, entre le moment de l'enfichage de l'émetteur (1) dans le logement (5, 5′) et le moment de l'émission automatique, par l'émetteur (1), d'un signal de commande.

11. Système de télécommande selon les revendications 6 ou 8 ou 10, contenant :
- un dispositif de réception (REC), mis en circuit en aval du logement (5), conçu pour recevoir les signaux de commande de l'émetteur,
caractérisé par
- un filtre (15), mis en circuit dans le logement (5; 5′), en amont du dispositif de réception (REC) relié au dispositif de contrôle de charge (8′), destiné aux signaux de commande de l'émetteur (1) et les laissant passer partiellement et affaiblissant leurs intensités,
- l'activation de l'affichage d'état de charge (13′), lorsque, une fois l'émetteur (1) enfiché dans le logement (5, 5′) et activé automatiquement, aucun signal de commande appréhendable n'arrive au dispositif de réception (REC).

12. Système de télécommande selon l'une des revendications précédentes, dans lequel le logement (5′) est réalisé sous forme de cylindre de fermeture et l'émetteur (1) est regroupé pour former un ensemble de construction, avec une clef (1′) mécanique,
caractérisé par
l'activation du dispositif de contrôle de charge (8′) par rotation du cylindre de fermeture dans une position de fonctionnement, au moyen d'un dispositif de commutation (16) couplé avec lui.

13. Système de télécommande selon l'une des revendications précédentes, prévu pour la télécommande d'un dispositif de verrouillage de véhicule automobile,
caractérisé par
- un dispositif d'appréhension (14), pouvant être mis en activité à partir du réseau électrique de bord du véhicule et visant à appréhender la présence de l'émetteur (1) dans le logement (5),
- l'activation du dispositif d'appréhension (14), seulement après déverrouillage préalable du dispositif de verrouillage.

14. Système de télécommande selon la revendication 2 ou 3, dans lequel l'émetteur (1) enfiché dans le logement (5) peut encore permettre, à volonté, l'émission d'un signal de commande en direction d'un dispositif de réception (REC) mis en circuit en aval dans le logement (5), conçu pour la réception des signaux de commande de l'émetteur (1), caractérisé par l'activation du dispositif de contrôle de charge (8′), par l'intermédiaire du dispositif de réception (REC), au moyen du signal de commande même ayant été produit.
